Europäisches Patentamt

European Patent Office

Office européen des brevets

(11) Publication number: **0 413 392 A2**

## (12) EUROPEAN PATENT APPLICATION

(21) Application number: **90202179.9**

(22) Date of filing: **09.08.90**

(51) Int. Cl.5: **G05D 13/62**

(30) Priority: **16.08.89 GB 8918704**

(43) Date of publication of application:
**20.02.91 Bulletin 91/08**

(84) Designated Contracting States:
**DE FR IT**

(71) Applicant: **T&N TECHNOLOGY LIMITED**
**Cawston House**
**Cawston Rugby Warwickshire, CV22**
**7SA(GB)**

(72) Inventor: **Slee, Roger Harvey**
**28 Oakwood Grove**
**Warwick, CV34 5TD(GB)**
Inventor: **Everitt, William Howard**
**Horley House, Horton Lane**
**Horley, Nr. Banbury, Oxfordshire(GB)**

(74) Representative: **Gibson, George Kevin et al**
**Bowdon House Ashburton Road West**
**Trafford Park Manchester M17 1RA(GB)**

(54) **CNC machine tools.**

(57) A feature is provided by a CNC machine tool (12) in a required angular position in relation to an existing feature of a workpiece (10), in a method including supplying to an electrical control system (22) both signals from a shaft encoder (28) rotating in synchronism with the workpiece (10); and an initial reference signal representative of the angular position of the existing feature with respect to the datum position of the shaft encoder (28). In each revolution of the workpiece, electro-optical detection (40) means determines when the existing feature is in a particular angular position, capable of being detected thereby, the particular angular position comprising the angular position of a discontinuity (32) at the surface of the workpiece (10), provided by the existing feature, and capable of causing a significant transition in the intensity of radiation incident upon a detector (52). The required reference signal is provided in response to such a determination. A subsequent CNC programme of machining is thereafter initiated in correct angular relationship to the existing workpiece feature.

FIG.1

## CNC MACHINE TOOLS

This invention relates to CNC machine tools, and in particular to CNC lathes and boring machines, and to the provision of a capability of adjusting the CNC programme of machining to provide machined features on the workpiece each at a predetermined angular relationship with respect to an existing workpiece feature.

It is required to determine the angular position of the initial surface feature with respect to a datum angular position provided by the machine tool. Previously, this has required either precise setting up of the workpiece in the machine tool, or the use of location jigs. Such procedures are laborious, and may be required to be performed for each individual workpiece.

It is an object of the present invention to provide a method of controlling the initiation of a CNC programme of machining of a CNC machine tool adapted to operate upon a workpiece of a predetermined shape, and in which method the angular position of an existing feature of the workpiece, with respect to a datum angular position provided by the machine tool is determined, in an advantageous way, before the machining operation commences.

It is another object of the present invention to provide a CNC machine tool adapted to operate upon a workpiece of a predetermined shape, and in which machine tool there is included means to determine, in an advantageous manner, before the machining operation on the workpiece commences, the angular position of an existing feature of the workpiece with respect to a datum angular position provided by the machine tool.

According to the present invention a method of controlling the initiation of a CNC programme of machining of a CNC machine tool, the machine tool being adapted to operate upon a workpiece under the control of an electrical control system of the machine tool, the workpiece having an existing feature, and the machine tool to provide a feature in a required angular position with respect to the angular position of said existing feature, the method includes supplying to the control system, and to signal processing means, encoder signals each representative of the instantaneous angular position of a shaft encoder rotating synchronously with the workpiece, and with respect to a datum position of the shaft encoder, in each revolution of the workpiece, detecting when said existing feature has a particular angular position, and, in response, providing to the signal processing means a particular signal, in turn the signal processing means supplying a reference signal to the control system, representative of the angular position of the existing workpiece feature with respect to the datum position of the shaft encoder, the control system being arranged such that, in response, the subsequent CNC programme of machining is initiated in the correct angular relationship to the existing workpiece feature.

The particular angular position is derived before the machining operation on the workpiece commences, and whilst the workpiece is rotating. Thus, the derivation of the particular angular position, conveniently, occurs whilst the workpiece is being rotated up to the desired machining speed.

The particular angular position comprises the angular position of any form of discontinuity at the surface of the workpiece, for example, by the mouth of a cross hole, the discontinuity being capable of causing a significant transition in the intensity of radiation incident upon a detector sensitive to the radiation, and the discontinuity being provided by said existing workpiece feature.

According to another aspect the present invention comprises a CNC machine tool adapted to operate upon a work piece having an existing feature, and in accordance with a method of controlling the initiation of a CNC programme of machining of the machine tool as referred to above, and the machine tool to provide a feature in a required angular position with respect to the angular position of said existing feature, has an electrical control system, a shaft encoder to rotate synchronously with the workpiece, signal processing means, and detection means, the shaft encoder to provide encoder signals, each representative of the instantaneous angular position of the workpiece with respect to a datum position of the shaft encoder both to the control system, and to the signal processing means, the detection means has a source of radiation , and a detector sensitive to the radiation emitted by the source, and arranged such that, in each revolution of the workpiece, there is to be provided a particular signal to the signal processing means in response to the detection that said existing feature has a particular angular position, in turn the signal processing means is arranged to supply a reference signal to the control system, representative of the angular position of the existing workpiece feature with respect to the datum position of the shaft encoder, the control system being arranged such that, in response, the subsequent CNC programme of machining is initiated in the correct angular relationship to the existing workpiece feature.

The source may provide a collimated beam of the radiation, and may comprise a laser.

The detection means may include a threshold comparator connected to the output of the detector, and arranged to provide a particular signal to the signal processing means, with said existing feature in the particular angular position, causing the intensity of the radiation incident upon the detector to cross a threshold value.

The machine may be adapted to operate upon a workpiece having a predetermined shape, such that the particular angular position is determined by the radiation traversing the workpiece in a plane at right angles to the axis of rotation, in both of two possible opposing directions.

Hence, the machine tool may be adapted to operate upon a workpiece having an existing feature comprising a bore with two mouths, and the bore extending through the workpiece, in a plane at right angles to the axis of rotation and the particular angular position is determined by the radiation traversing the bore.

Alternatively, the predetermined shape of the workpiece is such that the particular angular position is determined by radiation traversing the workpiece externally, and the existing feature comprises a protrusion on the workpiece.

The present invention will now be described by way of example with reference to the accompanying drawings, in which

Figure 1 shows a workpiece rotatable within a machine tool, also there being illustrated part of an electrical control system for the machine tool, signal processing means, and detection means,

Figure 2 shows a modification of the signal processing means of Figure 1,

Figure 3 shows another modification of the signal processing means,

Figure 4 is a flow chart of a programme for a data processor included in the electric control system of the machine tool of any one of Figures 1 to 3, whereby the machine tool is caused to provide machined features on the workpiece, there being indicated in this Figure the main sub-routines of the programme, and

Figure 5 is a flow chart indicating the constituent steps of a sub-routine of the programme of Figure 4, whereby a reference signal is caused to be supplied, by the signal processing means, to the electrical control system, so that a CNC programme of machining is initiated in a desired manner.

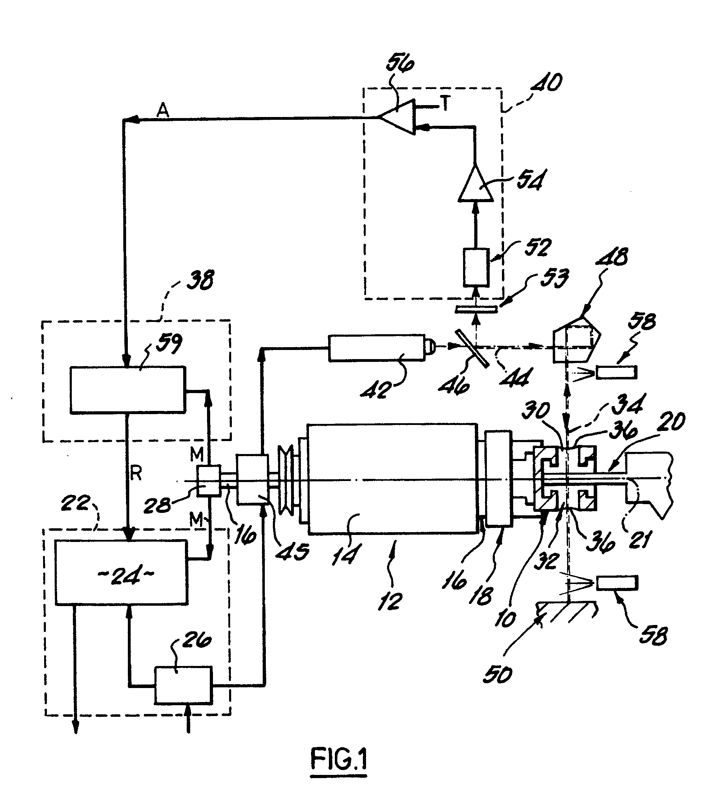

As shown in Figure 1 of the accompanying drawings, a workpiece 10 incorporating specific features is rotatably mounted on a a CNC lathe 12. This CNC machine tool 12 has a headstock 14, within which is mounted a main work spindle 16, and one end of the main spindle supports a workpiece holding device 18. A ram 20, extending from a tailstock (not shown), serves to assist clamping of the workpiece 10 in the holding device 18. Thus, the workpiece 10 rotates about an axis, indicated by the dotted line 21, and coincident with the axis of the main spindle 16.

The operation and sequence to be performed on the workpiece 10 is determined by an electrical control system 22 in a known manner. The electrical control system 22 is only schematically illustrated, and includes a data processor indicated generally at 24; and a power supply 26.

A rotary shaft encoder 28, is connected to the main work spindle 16, to rotate synchronously therewith, and provides digital encoder signals M, each representative of the instantaneous angular position of the spindle 16, any of which signals may be related to a chosen angular datum. The encoder signals M are supplied to the data processor 24.

It is required to provide a machined feature (not shown), for the workpiece 10, said feature to be in a predetermined angular position, with respect to the angular position of an existing workpiece feature.

Because the desired machined feature is provided under the control of the electrical control system 24, in particular, and in accordance with the present invention, it is required to provide also to the electrical control system, and before the machining of the workpiece 10 commences, a reference signal R, representative of the angular position of the existing workpiece feature with respect to the datum angular position of the shaft encoder 28.

Advantageously, the determination of the angular position of the surface feature is made before the machining operation on the workpiece commences, and whilst the workpiece is rotating.

In the illustrated embodiment, the workpiece 10 is represented by a piston for an internal combustion engine. The existing workpiece feature comprising a cross bore 32 (for eventual fitment of the gudgeon pin), and having mouths 30, the axis 34 of the bore, at least substantially, intersecting the axis of rotation 21 at right angles.

The required reference signal R is produced by signal processing means 38, in, at most, the first two revolutions of the workpiece 18, and in response to the receipt of particular signals A from detection means 40. The detection means 40 is arranged to produce a particular signal A, at each occurrence of the existing feature of the workpiece 10 being in a particular angular position, capable of being detected by the detection means.

The detection means 40 includes a laser 42 to emit radiation, of a predetermined wavelength, and in the form of a narrow collimated beam 44. The laser 42 is energised by the power supply 26, via a centrifugal transition switch 45 mounted on the spindle 16, and when the switch is closed, the laser provides a continuous output.

Initially, the laser beam 44 is transmitted through a partial transmission mirror 46; and is deviated through a right angle by an optical cube or pentaprism 48, or by a mirror (not shown). The arrangement is such that the laser beam 44 is capable of traversing the bore 32 through the workpiece, as the workpiece rotates, and with the beam at least substantially parallel to the cross bore axis 34. The beam 44 then is reflected back along its original path by a beam return mirror 50. When the reflected part of the beam 44 is incident upon the partial transmission mirror 46, it is reflected through 90°, or some chosen angle, and is caused to be incident upon a detector 52 sensitive to the radiation emitted by the laser 42.

The output of the detector 52 represents the intensity of the reflected laser beam instantaneously incident upon the detector. A filter 53, transmitting radiation only of the predetermined wavelength is placed in the path of the reflected laser beam 44 immediately before it impinges on the detector 52. Thus, the detector 52 is not affected by ambient radiation.

The continuous, but variable, output voltage from the detector 52, corresponding to the variable intensity of radiation incident upon the detector, is amplified by an amplifier 54, and is supplied to one input of a threshold comparator 56. A threshold voltage T is supplied to the other input of the threshold comparator 56. When the amplified voltage from the detector 52 crosses the threshold value T, simultaneously the existing feature of the workpiece 10 being considered to be in a particular angular position, in response, the threshold comparator is arranged to provide a particular signal A to the signal processing means 38.

As the workpiece 10 rotates, if the laser beam 44 impinges on the cylindrical wall of the workpiece, it is reflected away from the return path by which it is capable of being received by the detector 52. The amplified detector voltage is less than the threshold voltage T, and no particular signal is provided by the threshold comparator 56. However, when the laser beam 44 traverses the cross bore 32 through the workpiece 10, the mirror 50 reflects the laser beam back along part of its original path, to be reflected by the partial transmission mirror 46, and to be received by the detector 52. Because of the relative cross-sectional dimensions of the laser beam 44, and the dimensions of the bore 32, the amplified voltage from the detector rises rapidly to a magnitude greater than the threshold voltage T. In response to the amplified detector voltage crossing the threshold value T, a particular signal A is provided by the threshold comparator 56. As the workpiece 10 continues to rotate, the part of the path of the laser beam 44 through the bore 32 is interrupted, and the laser beam is not received by the detector 52. The amplified detector voltage falls rapidly to a magnitude less than the threshold voltage T.

Air jets, from nozzles 58, are directed across the path of the laser beam 44, on either side of the workpiece 10, to cause the removal of swarf or coolant droplets from the beam path, and, thus, to prevent unintentional deviation, or distortion, of the laser beam 44. In addition, or alternatively, protective guards (not shown) are provided for the same purpose.

The appropiate signal processing means 38, as shown in Figure 1, includes a register 59 connected to the shaft encoder 28, to receive encoder signals M therefrom. In response to a particular signal A from the detection means 40, there is stored, in binary form, in the register 59 the particular angular position of the existing feature of the workpiece 10, represented by the encoder signal M from the shaft encoder 28 instantaneous with the receipt by the register of the particular signal. The first corresponding output of the register 59 after the loading of the workpiece, and the starting of rotation of the spindle 16, comprises the required initial reference signal R, and is supplied to the data processor 24. The data processor operates upon the reference signal R, and in response triggers in the appropriate manner the commencement of a suite of pre-programmed tool motions.

With the signal processing means 38 of Figure 1, the complementary fall of the amplified detector voltage through the threshold value T does not cause a particular signal to be produced. The particular signal A is with the one side of a mouth 30 of the bore 32 comprising the existing workpiece feature, being in the particular angular position. The complementary fall of the amplified detector voltage through the threshold value T is caused by the laser beam 44 being intersected, at least adjacent to, the other side of the mouth 30 of the bore 32.

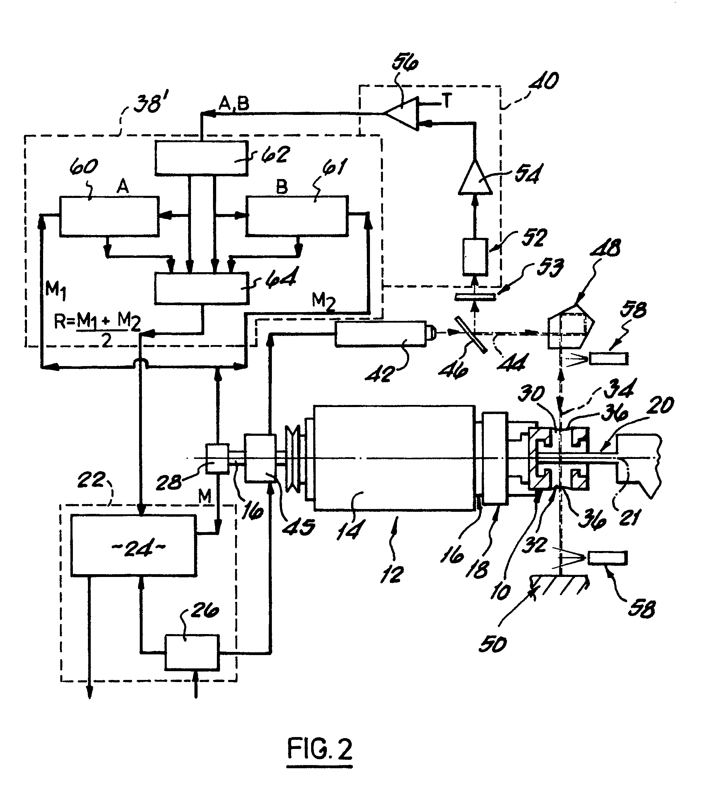

However, the signal B produced by the detection means 40 in response to the amplified detector voltage falling through the threshold value T also can be considered to be a particular signal, there being two existing workpiece features, each having a particular angular position in each rotation of the workpiece. Both particular signals A and B, are employed by the signal processing means in the producing the required initial reference signal R to be supplied to the data processor. Hence, in another form of the signal processing means 38[1], and shown in Figure 2, two registers 60 and 61 are provided, and each register is connected to the detection means 40 via a sequencer 62; and is connected to the shaft encoder 28, to receive encoder signals M therefrom. In response to a particular signal A from the detection means, a signal from the sequencer 62 causes there to be stored in one register 60 the corresponding particular angular position of the existing feature of the workpiece 10, represented by the encoder signal $M_1$ from the shaft encoder instantaneous with the receipt by the signal processing means of the particular signal A. In response to the complementary particular signal B, a signal from the sequencer 62 causes there to be stored in the other register 61 the corresponding particular angular position of the existing feature of the workpiece represented by the encoder signal $M_2$ from the shaft encoder instantaneous with the particular signal B.

Both registers 60, 61 are connected to averaging means 64 also included in the signal processing means $38^1$, and in response to both registers being enabled by the particular signals A and B, the averaging means 64 produces the required initial reference signal R, to be supplied to the data processor 24. This initial reference signal is representative of the mean of the two encoder signals stored in the two registers, $(M_1 + M_2)/2$. The mid position between the particular angular positions of the existing features of the workpiece corresponding to be the two particular signals A and B can be considered to be the sole particular angular position, instead of it being considered that there are two particular angular positions, of the existing features in each rotation of the workpiece.

The cross bore 32 has diametrically opposite mouths 30, and either mouth can be considered.

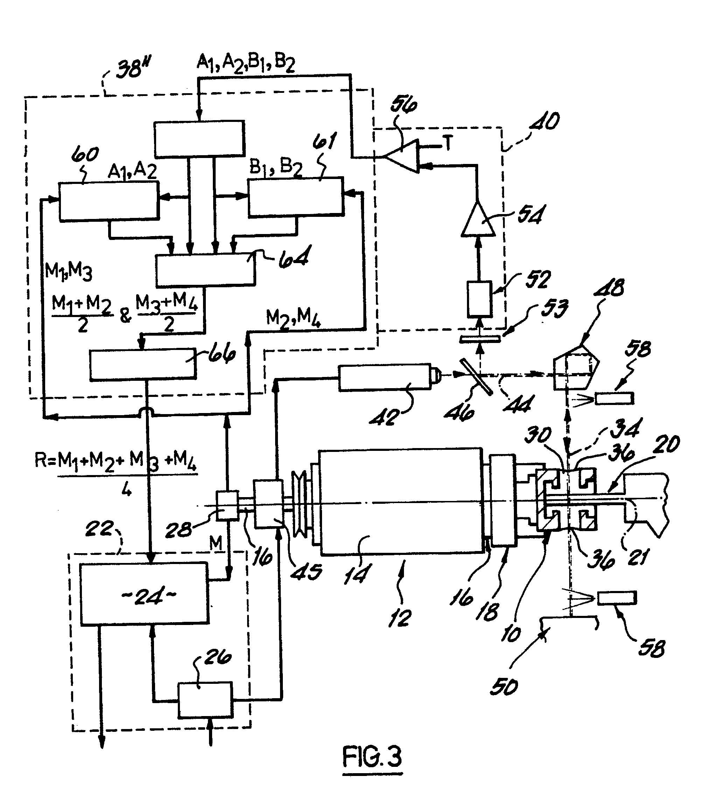

In order to ensure that the laser beam 44 is not received by the detector 52 by reflections normal to the cylindrical wall of the workpiece 10, resulting in the generation of spurious particular signals, the laser beam, as it traverses the bore 32, is arranged to be laterally offset from the axis of rotation 21. Thus, it is convenient that the considered particular angular position is the average of the two particular angular positions corresponding to the amplified detector voltage crossing the threshold value T in one direction, and of the two particular angular positions corresponding to the amplified detector voltage crossing the threshold value in the other direction, so that this offset of the laser beam is without effect. In the arrangement shown in Figure 3 such an offset is provided, and particular signals $A_1$, $A_2$, $B_1$ and $B_2$, are provided at the threshold crossings of the amplified detector voltage in each revolution of the workpiece 10.

A convenient form for the signal processing means $38^{11}$, for producing the reference signal R representative of the considered particular angular position referred to in the preceding paragraph, is shown in Figure 3. The signal processing means $38^{11}$ includes a first register 60, and a second register 61, both registers being connected to the shaft encoder 28, to receive encoder signals M therefrom. The four particular signals $A_1$, $A_2$, $B_1$, and $B_2$, from the output of the threshold comparator 56 are supplied to a sequencer 62 arranged, in relation to each pair of particular signals $A_1$, $B_1$, or $A_2$, $B_2$, associated with a mouth 30 of the cross bore 32, to supply the first particular signal A individually to the first register 60, and the second particular signal B individually to the second register 61, transiently to enable the registers. Thus, initially, in response to the first pair of particular signals $A_1$, and $B_1$, there is stored, in binary form, in the first register 60 the first particular angular position of the first mouth, represented by the encoder signal $M_1$ from the shaft encoder 28; and in the second register 61 the second particular angular position of the first mouth, represented by the encoder signal $M_2$. Both registers 60 and 61 are connected to averaging means 64, arranged, in response to both registers being enabled by the particular signals $A_1$ and $B_1$, to produce a signal $(M_1 + M_2)/2$, representative of the mean of the two encoder signals stored in the registers. This signal is supplied to reference signal producing means, indicated generally at 66, and is stored therein. In response to the second pair of particular signals $A_2$ and $B_2$, there is stored in the first register 60 the first particular angular position of the second mouth, represented by the encoder signal $M_3$ from the shaft encoder 28; and in the second register 61 the second particular angular position of the second mouth, represented by the encoder signal $M_4$. In response to both registers 60 and 61 being enabled by the particular signals $A_2$ and $B_2$, the averaging means 64 produces a signal $(M_3 + M_4)/2$, which is supplied to the reference signal producing means 66. In the reference signal producing means 66, this signal is averaged with the signal $(M_1 + M_2)/2$ stored therein, producing the required reference signal R. The reference signal R is supplied to the data processor 24.

The threshold voltage T is chosen so that a particular signal $A_1$, $A_2$, $B_1$, and $B_2$, is not produced other than at a transition, in either direction, between the laser beam 44 traversing the bore 32 in the workpiece 10, and being reflected by the mirror 50; and not traversing the bore.

In general reference signal R provides input information to the data processor 24 to initiate commencement of the CNC suite of machining events to ensure a correct angular relationship between some existing feature on the workpiece and the CNC generated turning or boring.

In one particular application of a machine tool in accordance with the present invention the workpiece comprises a piston for an internal combustion engine, and the machine tool is employed to diamond turn the piston skirt to provide the required ovality of the profiles thereof. The ovality of the piston skirt profiles is required to be in a desired relationship to the gudgeon pin cross holes, providing the, or each, existing feature of the piston to be considered in controlling the initiation of a CNC programme on a CNC machine tool in one of the ways referred to above.

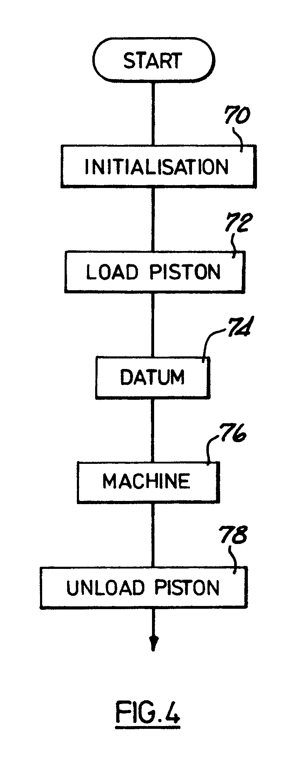

A flow chart of the programme for the data processor 24, and indicating the main sub-routines of the programme is shown in Figure 4. Thus, at the start of the operation of the machine tool, and before a piston is loaded onto the machine tool, there is provided the sub-routine 70 to cause the required initialisation procedures, in order to place the machine tool in a state of readiness to commence the desired machining operations. When the initialisation procedures are completed, and as indicated by the sub-routine 72, a piston 10 is loaded onto the machine tool 12, to be held by the tailstock (not shown) and the headstock 14 thereof in the manner shown in any of Figures 1 to 3.

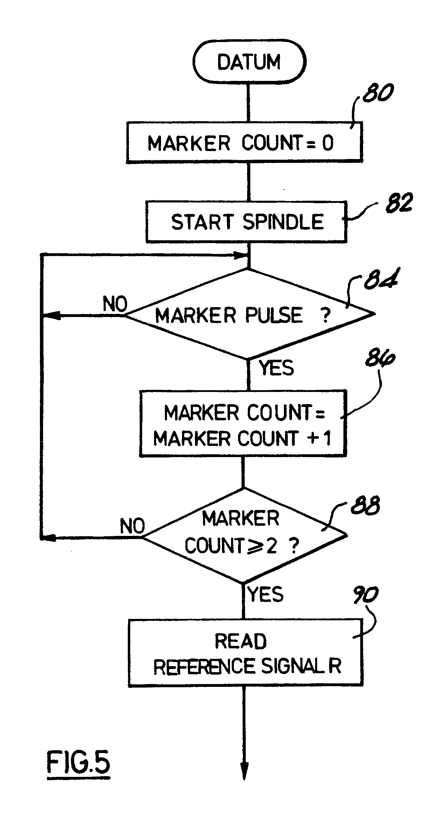

The third sub-routine, designated "Datum", and indicated at 74, controls the supply of a reference signal R from the signal processing means 38. Constituent steps of this sub-routine 74 are shown in Figure 5, and are described in detail below.

At the completion of the sub-routine 74 the piston is rotating at its required machining speed, and the sub-routine 76 comprising the CNC programme of machining of the workpiece 10 is entered.

At the completion of the machining operation the spindle 16 of the machine tool is stationary. The piston 10 is unloaded from the machine tool 12 in response to the sub-routine 78 of the programme being performed.

Subsequently, either sub-routines 72, 74, 76 and 78 are repeated in respect of the next piston 10 of a batch required to be machined by the tool 12 in accordance with the CNC programme of machining; or, if no further piston is required to be machined, the data processor programme is terminated.

The angular position of the spindle 16, and of the workpiece 10, cannot be known with certainty when the "Datum" sub-routine of the programme is entered. Consequently, in order to ensure that for the signal processing means $38^1$; and $38^{11}$; respectively, of Figures 2; and 3; the sequencer 62 has received the appropriate signals A and B; or $A_1$, $A_2$, $B_1$ and $B_2$; the spindle 16 is required to have completed at least one revolution before the initial reference signal R can be supplied.

The shaft encoder 28 provides a marker pulse, comprising one of the encoder signals M, when the spindle 16 is at a predetermined angular position. The marker pulses are stored in a register of the data processor 24. Thus, it is convenient to arrange that, when two such marker pulses are stored in the register, the initial reference signal R is to be supplied to the data processor 24.

The initial constituent step 80 of the "Datum" sub-routine of the data processor programme, as shown in Figure 5, comprises the setting to zero of the count in the register to store the marker pulses.

The next step 82 comprises the initiation of the rotation of the spindle 16 of the machine tool 12, by providing an appropriate signal from the control means 24.

In the next step 84 of the sub-routine the presence, or absence, of a marker pulse from the shaft encoder 28 is detected. If a marker pulse is not detected, step 84 is repeated, in a repetitive manner, until the presence of such a pulse is detected.

The step 86 is then performed, by which the count in the register is caused to be increased by one.

The next step 88 comprises determining whether, or not, the count in the register is at least two. If the determined count is less than two, the sequence of steps 84, 86 and 88 is repeated. Step 84 is repeated in a repetitive manner, until the presence of a further marker pulse from the shaft encoder 28 is detected. In response, step 86 is performed, and the count in the register is caused to be increased by a further unit. Then, in step 88, it is determined that the count in the register is at least two.

Finally, in step 90, the data processor 24 is caused to read the initial reference signal R supplied either by the means 64 of the signal processing means $38^1$ of Figure 2; or by the means 66 of the signal processing means $38^{11}$ of Figure 3; and the "Datum" sub-routine is completed.

A CNC machine tool in accordance with the present invention may incorporate various modifications from the arrangement described above.

It is not essential that the predetermined shape of the workpiece is such that the laser beam is to be capable of traversing a bore provided in the workpiece. Alternatively, the laser beam may be arranged to traverse, in a plane at right angles to the axis of rotation, generally across one end of the workpiece, and is capable of being intersected by a protrusion, such a lug, provided on the end of the workpiece, and as the workpiece rotates. Thus, the existing feature on the workpiece is provided by the protrusion.

The arrangement may be such that the laser beam is not required to traverse the workpiece in both directions, along the same path. For example, at least the part of the path of the laser beam in which it traverses a bore through the workpiece, or is capable of being intersected by a protrusion of the workpiece, is parallel to the axis of rotation of the workpiece.

The laser beam may not be required to traverse the workpiece, or to intersect protrusions of the workpiece, for example, the existing feature of the workpiece being a region with a significantly different reflectivity to that of the remainder of the surface of the workpiece.

In general, the particular angular position of a surface feature of the workpiece is determined by any form of discontinuity at the surface of the workpiece, capable of causing a significant transition in the intensity of the radiation to be incident upon the detector.

The laser may have a pulsed output.

The source of the collimated laser beam may not comprise a laser. There may be provided means to collimate in a source which does not inherently provide a collimated beam. Alternatively, the source does not provide a collimated beam of radiation.

The workpiece of the predetermined shape, having at least one existing workpiece feature, instead of comprising an internal combustion engine piston as referred to above, for example, may comprise a bearing. Thus, a laser beam may be arranged to traverse diametrically opposite oil feed holes, before the CNC machine tool provides features on a part-spherical bearing, and in order to control the initiation of a CNC programme of machining of the machine tool. Although required to be mounted rotatably in the machine tool, the workpiece may not have a generally cylindrical form.

The required machined feature for the workpiece may have any desired form, for example, comprising a bore.

## Claims

1. A method of controlling the initiation of a CNC programme of machining of a CNC machine tool, the machine tool being adapted to operate upon a workpiece under the control of an electrical control system of the machine tool, the workpiece having an existing feature, and the machine tool to provide a feature in a required angular position with respect to the angular position of said existing feature, the method includes supplying to the control system, encoder signals each representative of the instantaneous angular position of a shaft encoder rotating synchronously with the workpiece, and with respect to a datum position of the shaft encoder, and the method being characterised by also supplying the encoder signals to signal processing means, in each revolution of the workpiece, detecting when said existing feature has a particular angular position, and, in response, providing to the signal processing means a particular signal, in turn the signal processing means supplying a reference signal to the control system, representative of the angular position of the existing workpiece feature with respect to the datum position of the shaft encoder, the control system being arranged such that, in response, the subsequent CNC programme of machining is initiated in the correct angular relationship to the existing workpiece feature.

2. A method as claimed in claim 1, characterised by, with said existing feature at the particular angular position, there is caused a significant transition in the intensity of radiation incident upon a detector sensitive to the radiation.

3. A CNC machine tool adapted to operate upon a workpiece having an existing feature, the machine tool to provide a feature in a required angular position with respect to the angular position of said existing feature, has an electric control system, and a shaft encoder to rotate synchronously with the workpiece, and to provide encoder signals to the control system, each encoder signal being representative of the instantaneous angular position of the workpiece with respect to a datum position of the shaft encoder, characterised in that the encoder signals are also supplied to signal processing means, the machine tool also has detection means with a source of radiation, and a detector sensitive to the radiation emitted by the source, and arranged such that, in each revolution of the workpiece, there is to be provided a particular signal to the signal processing means in response to the detection that said existing feature has a particular angular position, in turn the signal processing means is arranged to supply a reference signal to the control system, representative of the angular position of the existing workpiece feature with respect to the datum position of the shaft encoder, the control system being arranged such that, in response, the subsequent CNC programme of machining is initiated in the correct angular relationship to the existing workpiece feature.

4. A machine tool as claimed in claim 3, characterised in that the source is to provide a collimated beam of the radiation.

5. A machine tool as claimed in claim 4, characterised in that the source comprises a laser.

6. A machine tool as claimed in claim 3, or claim 4, or claim 5, characterised in that the detection means includes a threshold comparator connected to the output of the detector, and arranged to provide a particular signal to the signal processing means, with said existing feature in the particular angular position, causing the intensity of the radiation incident upon the detector to cross a threshold value.

7. A machine tool as claimed in any one of claims 3 to 6, characterised by being adapted to operate upon a workpiece of a predetermined shape such that the particular angular position comprises the angular position of a discontinuity at the surface of the workpiece, capable of causing a significant transition in the intensity of the radiation to be incident upon the detector, and the discontinuity is provided by said existing workpiece feature.

8. A machine tool as claimed in claim 7 , characterised by being adapted to operate upon a workpiece having a predetermined shape such that the particular angular position is determined by the radiation traversing the workpiece in a plane at right angles to the axis of rotation, in both of two possible opposing directions.

9. A machine tool as claimed in claim 8, characterised by being adapted to operate upon a workpiece having an existing feature comprising a bore with two mouths, and the bore extending through the workpiece , in a plane at right angles to the axis of rotation, and the particular angular position is determined by the radiation traversing the bore.

10. A machine tool as claimed in claim 8, characterised by being adapted to operate upon a workpiece of a predetermined shape such that the particular angular position is determined by the radiation traversing the workpiece externally, and the existing feature comprises a protrusion on the workpiece.

FIG.1

FIG. 2

FIG.3

START

_70_
INITIALISATION

_72_
LOAD PISTON

_74_
DATUM

_76_
MACHINE

_78_
UNLOAD PISTON

FIG.4

FIG.5